# EUROPEAN PATENT APPLICATION

(11) **EP 1 613 002 A1**
(43) Date of publication of application: **04.01.2006**
(21) Application number: 03816597.3
(22) Date of filing: 04.04.2003
(51) Int. Cl.: H04L 12/46, H04L 12/28

(54) **MOBILE TERMINAL AND RADIO ACCESS POINT IN RADIO ACCESS SYSTEM**

(71) Applicant: FUJITSU LIMITED, Kawasaki-shi, Kanagawa 211-8588 (JP)
(72) Inventor: MORI, Masaru, C/O FUJITSU LIMITED, Kawasaki-shi, Kanagawa 211-8588 (JP)
(74) Representative: HOFFMANN EITLE
(86) International application number: PCT/JP2003/004365
(87) International publication number: WO 2004/091148

(57) **Abstract**

A mobile terminal (10) in a radio access system detects communication quality such as frequency of retransmission, packet error rate, etc. on an RLP-based radio link, and converts the communication quality into a traffic class in IP or a window size in TCP. Based on the thus converted communication quality, flow control is performed at IP or TCP. At a radio access point (12) also, quality information is extracted from an IP header or a TCP header, and the number of packets into which the IP or TCP packet is to be fragmented, retransmission count, etc. are set based on the extracted information.

## Description

### TECHNICAL FIELD

The present invention relates to a mobile terminal and a radio access point in a radio access system in which the terminal is connected to the access point via a radio link.

### BACKGROUND ART

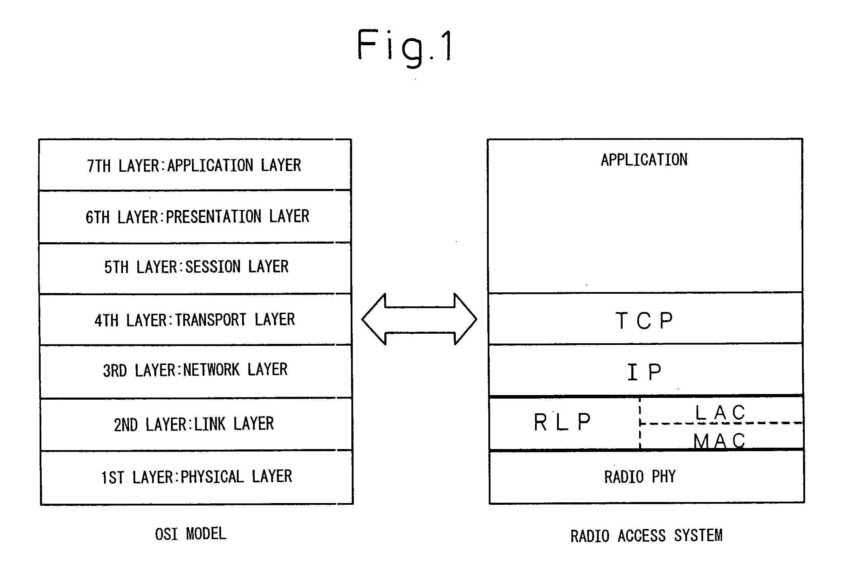

Figure 1 shows the architecture of a radio access system for comparison with the OSI model.

In Figure 1, the first layer (physical layer) of the OSI model, in the radio access system, provides for processing such as encoding and modulation in a radio transmission path. The second layer (data link layer), in the radio access system, provides for the detection of errors on the radio transmission path and mechanisms to cope with transmission delays or data losses or to ensure data bandwidth, in order to alleviate the effects of a failure that may occur in the radio transmission path. The third layer (network layer) provides for processing such as routing and flow control in a network. The fourth layer (transport layer) provides for end-to-end error recovery and flow control.

In the current radio access system, the second layer is called the Radio Link Protocol (RLP). The RLP comprises two sublayers: the Link Access Control (LAC) sublayer and the Media Access Control (MAC) sublayer.

In recent years, in radio access systems such as mobile communications, the frequency of use of packet data has been increasing rapidly; in such cases, considering the compatibility with existing networks, it is common to use the Internet Protocol (IP) at the third layer and the Transmission Control Protocol (TCP) at the fourth layer, as shown in Figure 1.

In the current IP network technology, it is attempted to ensure the quality of service as a network by applying DiffServ, which differentiates QoS (Quality of Service) levels by classifying traffic flows, or RSVP, which is a protocol for providing a bandwidth guarantee.

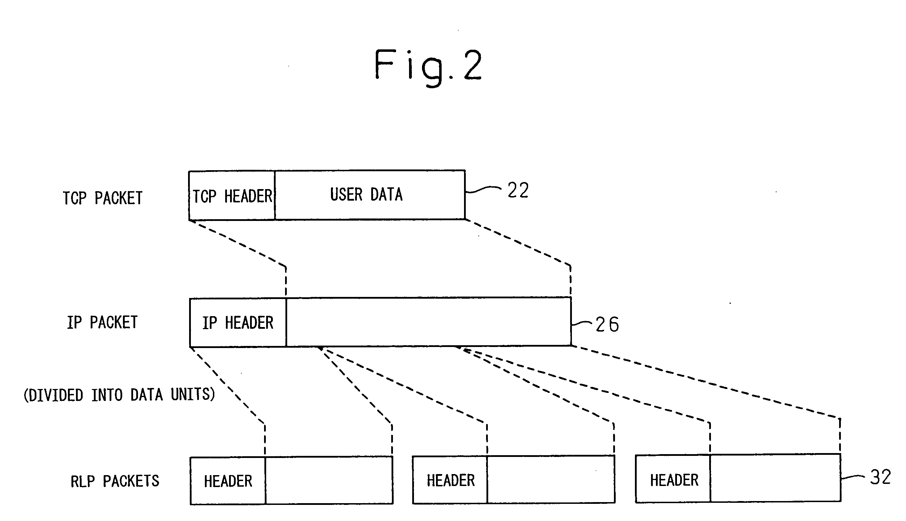

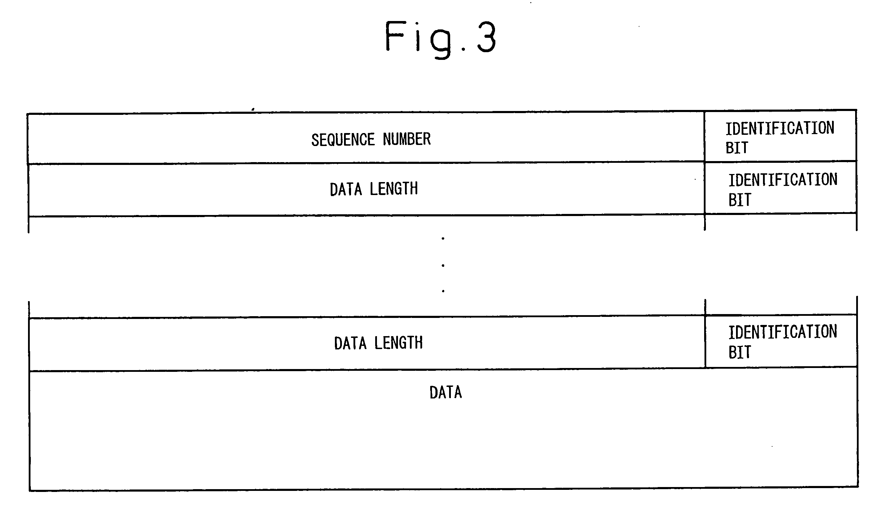

Figure 2 shows one example of how data packets are constructed. As shown in Figure 2, in the TCP protocol, a TCP header is added to the user data generated at the application layer above it, and the resulting data is sent to the IP protocol at the lower layer. In the IP protocol, an IP header is added to the TCP packet, which is then sent to the RLP at the lower layer. In the RLP protocol, the IP packet is fragmented into data units, and RLP packets are created by adding information headers to the respective data units. The data unit size into which to fragment the IP packet is determined by the RLP. Figure 3 shows one example of the RLP packet format.

In Figure 3, sequence numbers are used not only for controlling the fragmentation of and combining into the IP packet at the upper layer, but also used for retransmission processing when an RLP packet is lost and for packet discarding when packets of the same sequence number are received.

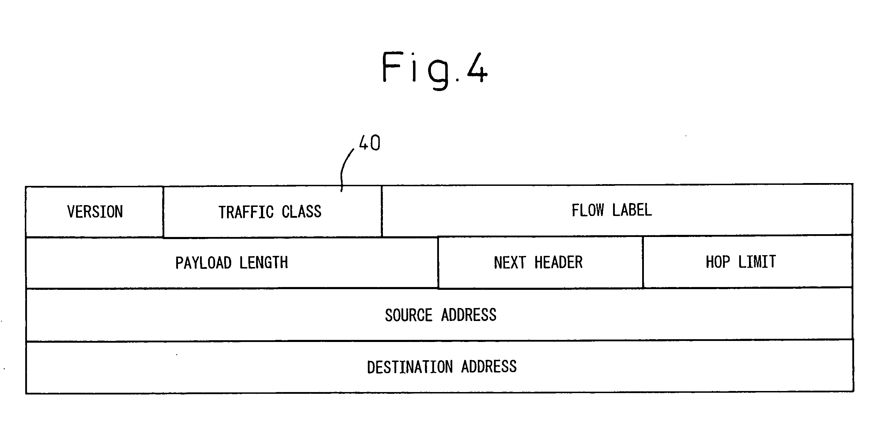

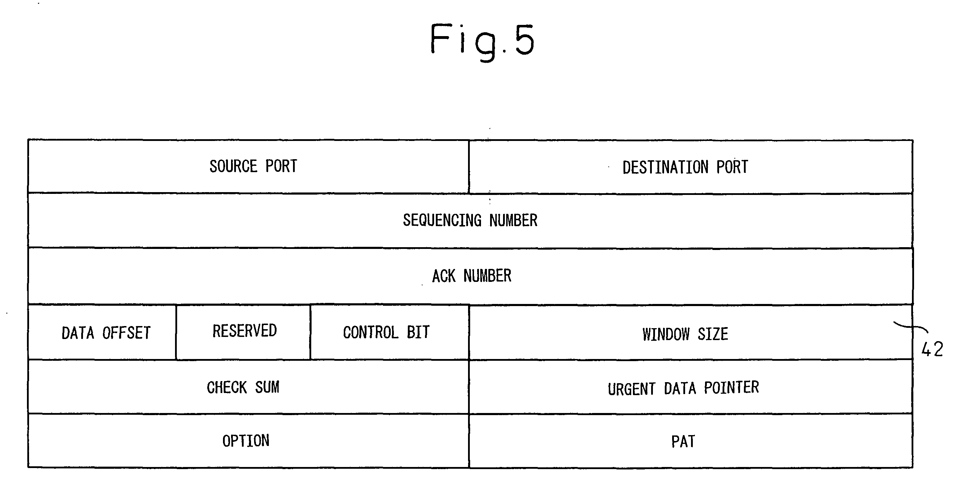

The structure of the IP header (in the case of IPv6) is shown in Figure 4, while the structure of the TCP header is shown in Figure 5.

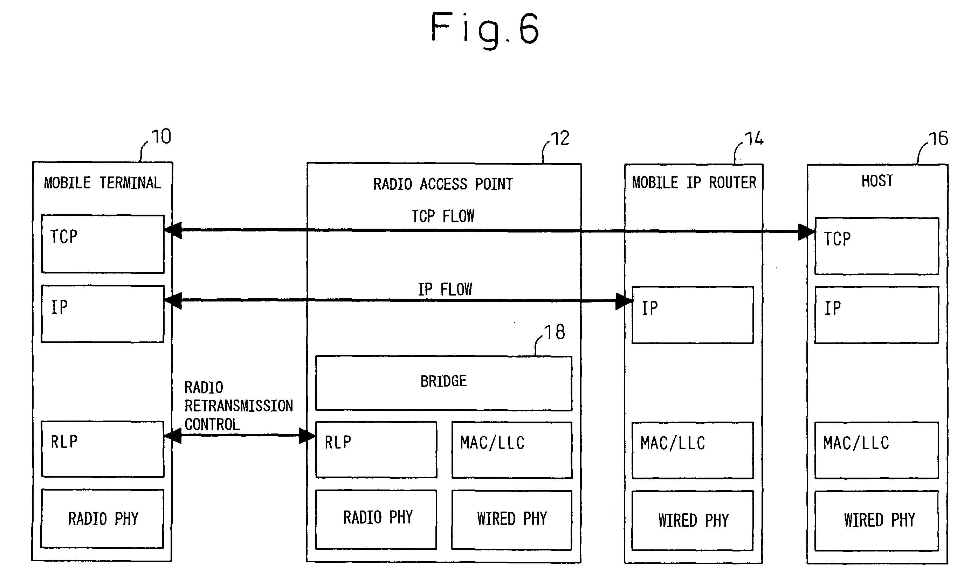

Figure 6 is a diagram showing one configuration example of a radio access system.

The radio access system shown in Figure 6 comprises a mobile terminal 10, a radio access point 12, a mobile IP router 14, and a host 16. Here, the mobile terminal 10 is connected to the radio access point 12 via a radio link, while the link between the radio access point 12 and the mobile IP router 14, as well as the link between the mobile IP router 14 and the host 14, is a wired link.

The mobile terminal 10 has the function of terminating the first to fourth layers. The radio access point 12 has the function of terminating the first and second layers but, as the transmission medium switches from wireless to wired at the radio access point 12, to handle this, the function of a bridge 18 is provided at a layer above the second layer. The mobile IP router 14 has the function of terminating the first to third layers. The host 16 has the function of terminating the first to fourth layers.

Accordingly, radio retransmission control at the second layer is performed between the mobile terminal 10 and the radio access point 12. Likewise, IP flow control at the third layer is performed between the mobile terminal 10 and the mobile IP router 14, while TCP flow control at the fourth layer is performed between the mobile terminal 10 and the host 16.

In such a radio access system, burst errors often occur on a radio transmission path due to fading, etc., resulting in data packet loss. To recover any lost packet, the RLP performs processing for retransmission, but this processing is done without regard to any processing being performed at other layers.

This can, for example, lead to a situation where the TCP performs flow control between the mobile terminal and the host when the RLP is in the process of data packet retransmission between the mobile terminal and the radio access point in order to recover the lost data and, hence, to the problem that data throughput greatly decreases.

More specifically, in TCP, when performing flow control of data packets, the maximum number of data blocks that can be accepted by the data receiving side is presented to the transmitting side by using a window field in the header of a packet carrying an ACK signal that the receiving side returns to the transmitting side, thus making it possible to control the number of data blocks that the transmitting side can send without waiting for an acknowledgement; however, data transmission conditions, such as error conditions occurring over the radio link, are not reflected in determining the window size to be presented here.

Further, in RLP, when performing the processing for retransmission in order to recover from packet loss, retransmission timer value and retransmission count are determined in advance by considering the transmission conditions of the radio link; however, data delays and congestion that may occur when the TCP performs flow control are not considered here. This is also true of the flow control in the IP.

Another factor that reduces the data throughout is the inability to secure bandwidth for a new data transmission because of the occurrence of unnecessary retransmission. Here, unnecessary retransmission occurs, for example, when the retransmission process is automatically initiated because an ACK time-out has occurred at the TCP due to an abrupt increase in transmission delay caused by retransmissions at the RLP, or when a selective retransmission request is issued because of the detection of an abnormality in the sequencing of TCP packets at the receiving side.

In this way, while the RLP has already recovered from packet loss, the TCP may initiates retransmission flow control, or unnecessary retransmission may occur, resulting in a decrease in the throughout of the network as a whole.

In Patent Document 1, shown below, it is disclosed that the quality of service parameters at the physical layer of the OSI model are transferred to the upper layers as each layer provides services to the layer above, until the parameters reach the uppermost application layer, thus making the application layer fit its own performance to the quality of service presented at the physical layer.

However, there has been the problem that if this technique is applied as is, the above-described deficiencies associated with the radio access system cannot be solved.
Patent Document 1
   Japanese Published Patent Application No. 2001-519112
Patent Document 2
   Japanese Unexamined Patent Publication No. H06-276254
Patent Document 3
   Japanese Unexamined Patent Publication No. 2001-36578
Patent Document 4
   Japanese Unexamined Patent Publication No. 2000-224261
Patent Document 5
   Japanese Unexamined Patent Publication No. 2000-106557

### DISCLOSURE OF THE INVENTION

An object of the present invention is to provide a technique for improving the throughout of a radio access system by exchanging communication quality parameters between different protocol layers.

According to the present invention, there is provided a mobile terminal in a radio access system, comprising: a communication quality detecting section for detecting communication quality at a first communication protocol layer which provides a radio link between the mobile terminal and a radio access point; and a converting section for converting the detected communication quality into information representing communication quality at a second communication protocol layer which resides above the first communication protocol layer, and for providing the information to the second communication protocol layer.

The second communication protocol is, for example, TCP (Transmission Control Protocol); in this case, the mobile terminal further comprises a TCP frame control section for receiving the communication quality information and using the same for TCP flow control.

Alternatively, the second communication protocol is, for example, IP (Internet Protocol); in this case, the mobile terminal further comprises a message generating section for generating an ICMP (Internet Control Message Protocol) message containing the converted communication quality information in response to an echo request message received from a remote end of an IP flow, and for transmitting the ICMP message for use in IP flow control.

According to the present invention, there is also provided a radio access point in a radio access system, comprising: a header detecting section for extracting, from a received packet, communication quality information stored in a header thereof at a first communication protocol layer which is not terminated in the radio access point; and a converting section for converting the communication quality information extracted by the header detecting section into a quality control parameter for use at a second communication protocol layer which provides a radio link between a mobile terminal and the radio access point.

The communication quality information stored in the header is, for example, a window size stored in a TCP header.

Alternatively, the communication quality information stored in the header is, for example, a traffic class stored in an IP header.

### BRIEF DESCRIPTION OF THE DRAWINGS

Figure 1 is a diagram showing a radio access system for comparison with the OSI model;
Figure 2 is a diagram showing the relationship between various kinds of packets;
Figure 3 is a diagram showing the structure of an RLP packet;
Figure 4 is a diagram showing the structure of an IP header;
Figure 5 is a diagram showing the structure of a TCP header;
Figure 6 is a diagram showing one configuration example of a radio access system;
Figure 7 is a diagram showing a first embodiment of the present invention;
Figure 8 is a diagram showing a first configuration example of a mobile terminal according to the first embodiment of the present invention;
Figure 9 is a diagram showing a communication sequence in an example in which a window size at TCP is changed in accordance with communication quality at RLP;
Figure 10 is a diagram showing a communication sequence in an example in which TCP retransmission timer is set longer than RLP retransmission processing time;
Figure 11 is a diagram showing a second configuration example of the mobile terminal according to the first embodiment of the present invention;
Figure 12 is a diagram for explaining how communication quality information is reported by means of an ICMP message in Figure 11;
Figure 13 is a diagram showing a second embodiment of the present invention;
Figure 14 is a diagram showing a first example of a radio access point according to the second embodiment of the present invention; and
Figure 15 is a diagram showing a second example of the radio access point according to the second embodiment of the present invention.

### BEST MODE FOR CARRYING OUT THE INVENTION

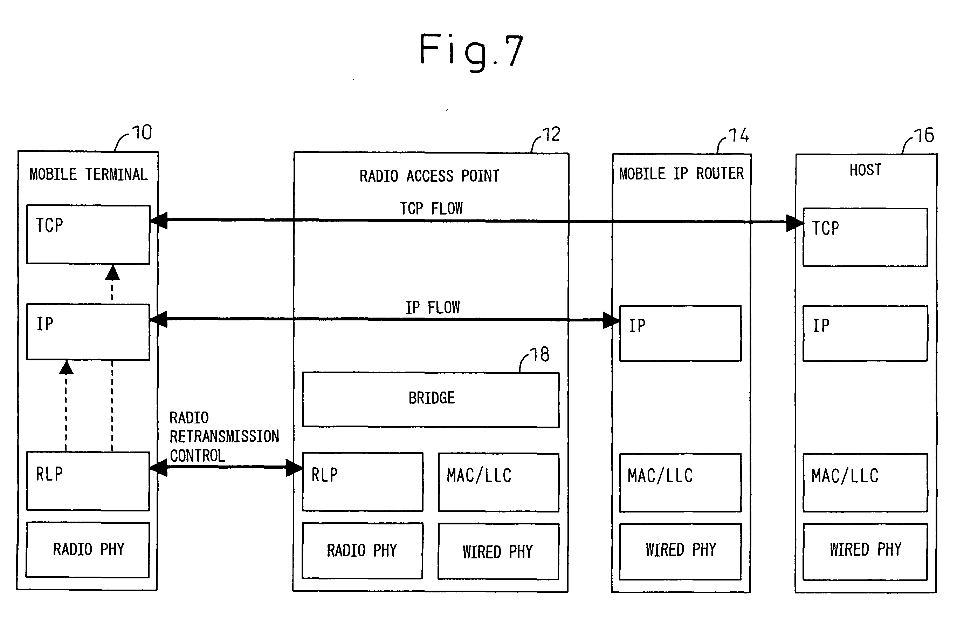

Figure 7 is a diagram showing the flow of quality information, in the configuration diagram of Figure 6, according to a first embodiment of the present invention. As shown by dashed lines in Figure 7, in the first embodiment of the present invention, quality information (QoS parameters) to be used at the TCP layer or the IP layer is determined based on RLP packet retransmission state (number of retransmissions per unit time), RLP packet discard state (RLP packet discard rate), and retransmission processing time at the RLP layer in the mobile terminal 10 and, by using the thus determined quality information at the TCP layer or the IP layer, the communication quality at the RLP layer is reflected in the flow control at the TCP layer or the IP layer.

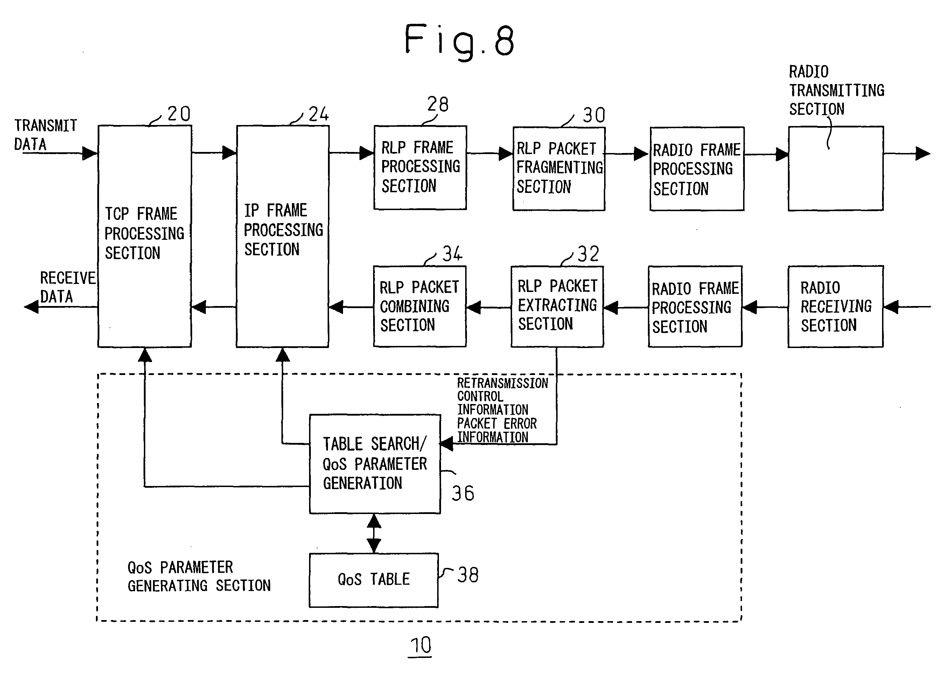

Figure 8 shows a first configuration example of the mobile terminal 10 according to the first embodiment of the present invention.

In Figure 8, a TCP frame processing section 20 accepts transmit data (user data) and creates the TCP packet 22 shown in Figure 2; it also extracts received data from the TCP packet passed from an IP frame processing section 24. The IP frame processing section 24 receives the TCP packet 22 from the TCP frame processing section 20 and creates the IP packet 26 shown in Figure 2; it also extracts the TCP packet 22 from the IP packet 26 passed from an RLP packet combining section 34, and passes the TCP packet 22 to the TCP frame processing section 20. An RLP frame processing section 28 and an RLP packet fragmenting section 30 create the RLP packets 32 from the IP packet 26, as shown in Figure 2. An RLP packet extracting section 32 extracts parameters concerned with the radio link, such as the number of retransmissions per unit time, the packet error rate, and the retransmission processing time, and passes them to a table searching/QoS parameter generating section 36. By referring to a QoS table 38, the table searching/QoS parameter generating section 36 converts the number of retransmissions and the packet error rate into quality information (to be described later) for use at the IP or TCP layer, determines a timeout period longer than the above retransmission time, and passes them to the IP frame processing section 24 or the TCP frame processing section 20. The IP frame processing section 24 stores the received quality information, for example, in a traffic class field 40 (see Figure 4) in the IP header of the transmit packet. The TCP frame processing section 20 stores the received quality information, for example, in a window size field 42 (see Figure 5) in the TCP header of the transmit packet. Further, the received timeout period is set in a retransmission timer.

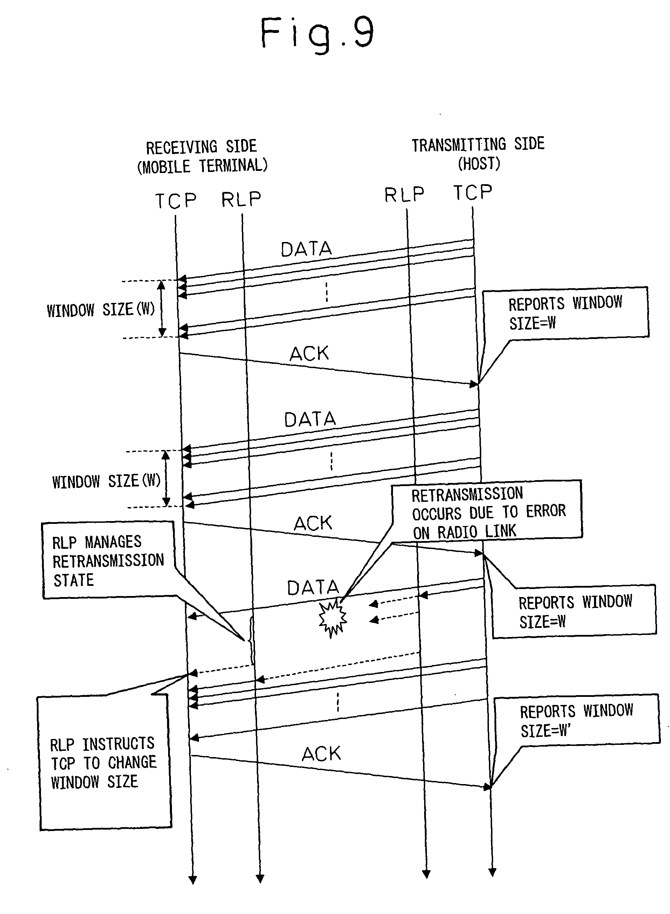

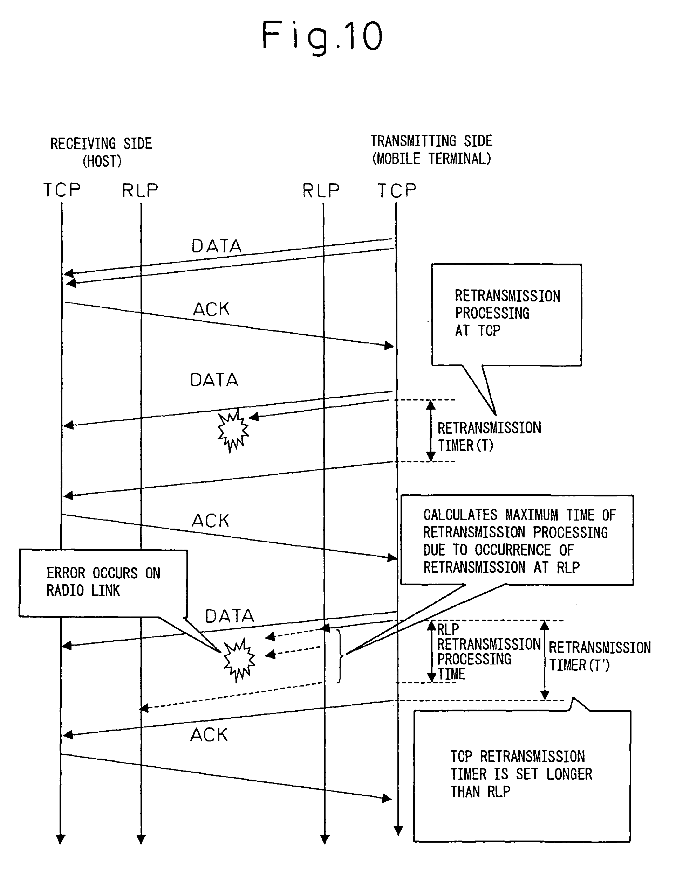

Figure 9 shows an example of how the window size specified in the TCP header that carries an ACK signal to be sent to the host is changed from W to W' when the frequency of occurrence of retransmission on the radio link has increased. In this way, the communication quality of the radio link can be reflected in the TCP flow control of the packets destined from the host to the mobile terminal. Figure 10 shows an example of how the timeout period of the transmission timer at the TCP layer is set longer than the RLP retransmission processing time. In this way, the communication quality of the radio link can be reflected in the TCP flow control of the packets destined from the mobile terminal to the host.

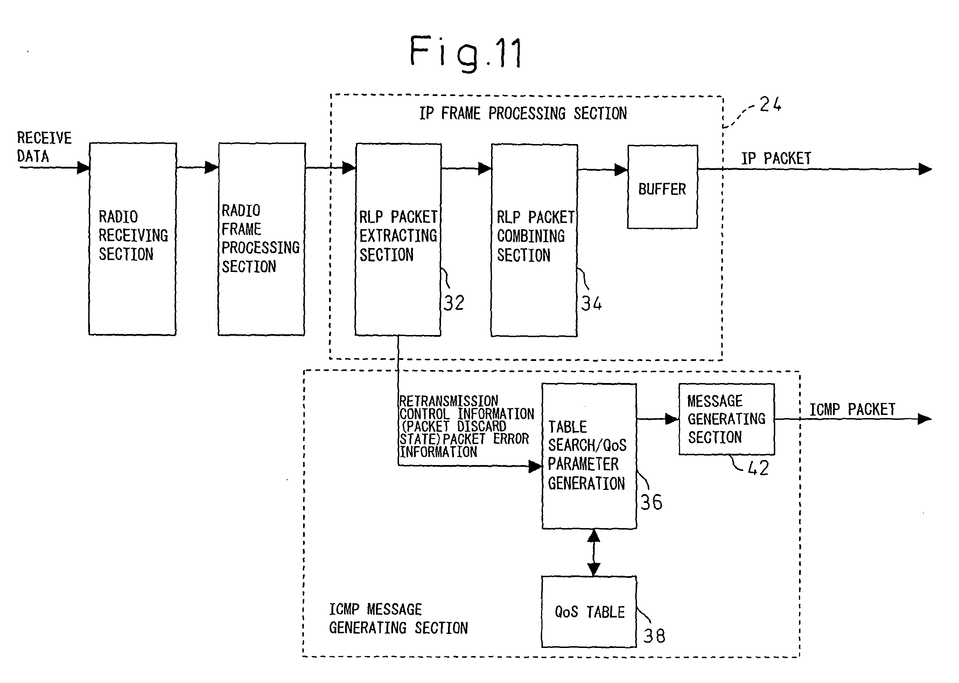

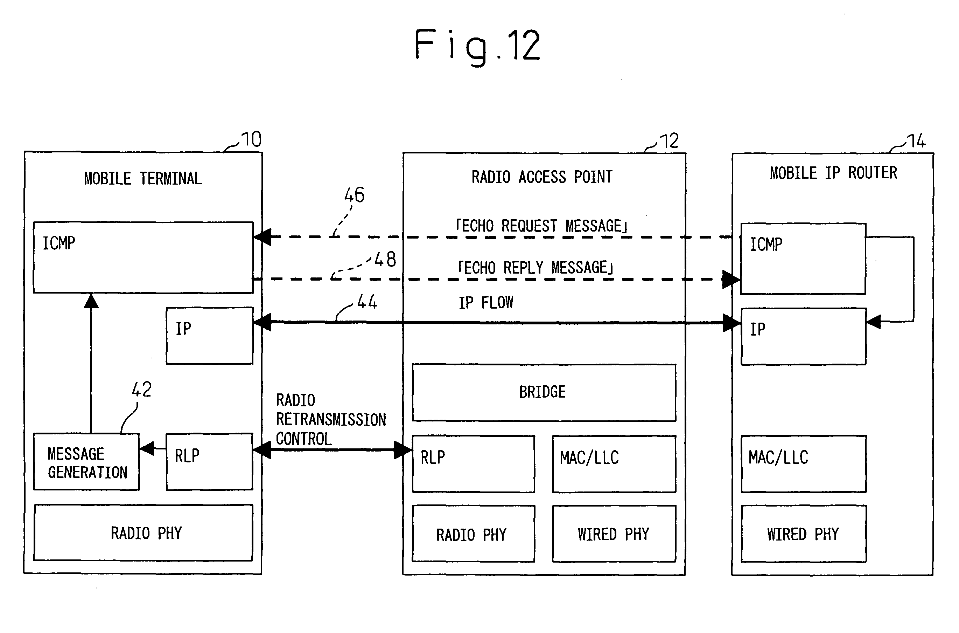

Figure 8 has shown an example in which the QoS information is included in a packet destined from the mobile terminal to the host 16; on the other hand, Figure 11 shows an example in which the QoS information is included in a packet to be received by the mobile terminal. The QoS information generated by the table searching/QoS parameter generating section 36 is passed to a message generating section 42. As shown in Figure 12, when an echo request message 46 is transferred in the form of an ICMP (Internet Control Message Protocol) packet from the mobile IP router 14 at the other terminating end of the IP flow 44, the mobile terminal 10 responds to it by sending an echo reply message 48 in the form of an ICMP packet which is created by the message generating section 42. In this way, the quality information at the RLP layer can be reflected in the traffic class of the IP packet to be sent from the mobile IP router 14 to the mobile terminal 10.

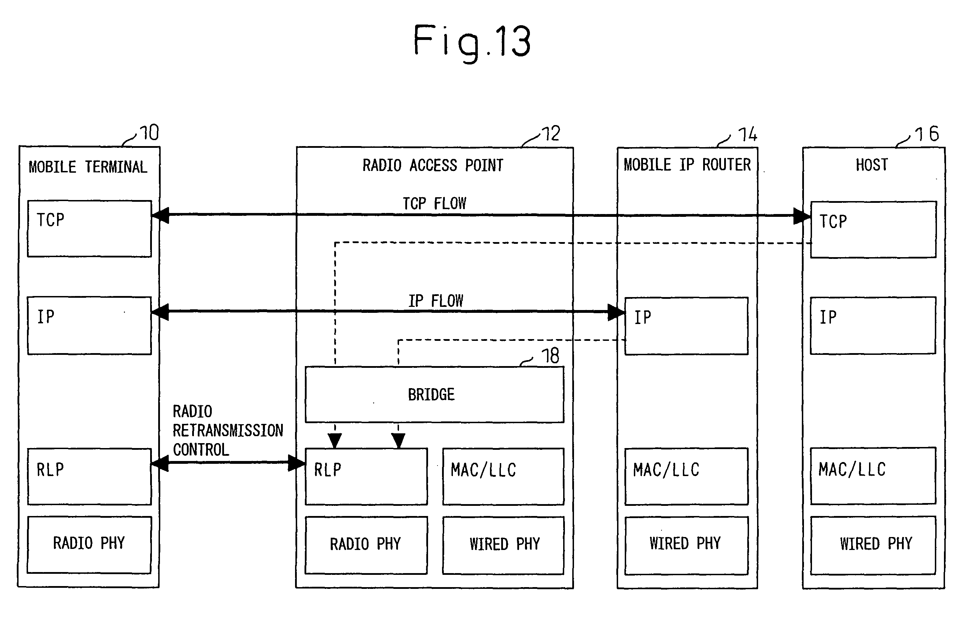

Figure 13 is a diagram showing the flow of QoS information on the configuration diagram of Figure 6 according to a second embodiment of the present invention. As shown by dashed lines in Figure 13, the header of the TCP packet transferred from the host 16 or the header of the IP packet transferred from the mobile IP router 14 is extracted at the radio access point 12, and the quality information contained in the header is reflected in the retransmission control at the RLP layer.

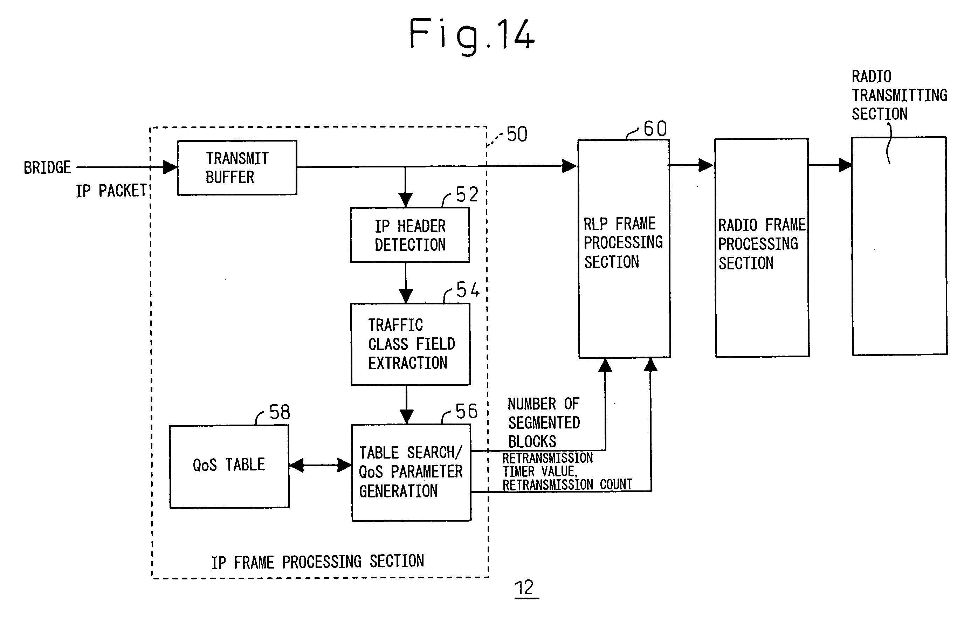

Figure 14 shows a first configuration example of the radio access point according to the second embodiment of the present invention. In an IP frame processing section 50 newly provided in the radio access point, an IP header detecting section 52 extracts the IP header from the IP packet received from the bridge 18 (Figure 13), and a traffic class field extracting section 54 extracts the information stored in the traffic class field 40 (Figure 4) of the IP header. A table searching/QoS parameter generating section 56 determines the retransmission timer value, retransmission count, etc. at the RLP layer from the traffic class by referring to a QoS table 58 such as shown in Table 1 below, and passes them to an RLP frame processing section 60.

**Table 1**

| Traffic Class | Quality Assured ↔ Low Latency |
|---|---|
| Retransmission Timer Value | Large ↔ Small |
| Retransmission Count | Large ↔ Small |
| RLP Packet Size | Small ↔ Large |
| Number of RLP Blocks | Large ↔ Small |

Based on this information, the RLP frame processing section 60 creates RLP packets (see Figures 2 and 3) from the IP packet. The above set values at the RLP layer, determined at the radio access point side, are transferred to the mobile terminal at the other end of the radio transmission path, and the same set values are set in the RLP frame processing section 12 at the mobile terminal side.

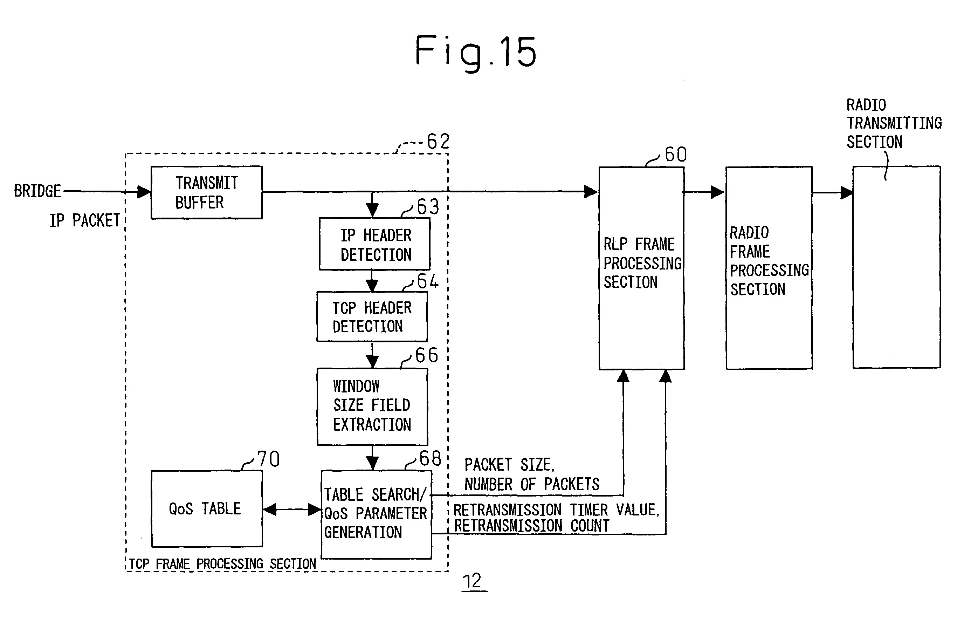

Figure 15 shows a second configuration example of the radio access point according to the second embodiment of the present invention. In a TCP frame processing section 62 newly provided in the radio access point, an IP header detecting section 63 extracts the TCP packet from the IP packet received from the bridge 18 (Figure 13), a TCP header detecting section 64 extracts the TCP header of the TCP packet, and a window size field extracting section 66 extracts the information stored in the window size field 42 (Figure 5) of the TCP header. A table searching/QoS parameter generating section 56 determines the retransmission timer value, retransmission count, etc. at the RLP layer from the window size by referring to a QoS table 58 such as shown in Table 2 below, and passes them to an RLP frame processing section 60.

**Table 2**

| | |
|---|---|
| Window Size | Large ↔ Small |
| RLP Packet Size | Large ↔ Small |
| Number of RLP Blocks | Large ↔ Small |

Based on this information, the RLP frame processing section 60 creates RLP packets (see Figures 2 and 3) from the IP packet.

## Claims

1. A mobile terminal in a radio access system, comprising:
a communication quality detecting section for detecting communication quality at a first communication protocol layer which provides a radio link between the mobile terminal and a radio access point; and
a converting section for converting the detected communication quality into information representing communication quality at a second communication protocol layer which resides above the first communication protocol layer, and for providing the information to the second communication protocol layer.

2. A mobile terminal according to claim 1, wherein the second communication protocol is TCP (Transmission Control Protocol), the mobile terminal further comprising:
a TCP frame control section for receiving the communication quality information and using the same for TCP flow control.

3. A mobile terminal according to claim 2, wherein the communication quality information is a window size to be reported to a host in the TCP flow control.

4. A mobile terminal according to claim 2, wherein the communication quality information is a timeout period for a retransmission timer in TCP.

5. A mobile terminal according to claim 1, wherein the second communication protocol is IP (Internet Protocol), the mobile terminal further comprising:
a message generating section for generating an ICMP (Internet Control Message Protocol) message containing the converted communication quality information in response to an echo request message received from a remote end of an IP flow, and for transmitting the ICMP message for use in IP flow control.

6. A radio access point in a radio access system, comprising:
a header detecting section for extracting, from a received packet, communication quality information stored in a header thereof at a first communication protocol layer which is not terminated in the radio access point; and
a converting section for converting the communication quality information extracted by the header detecting section into a quality control parameter for use at a second communication protocol layer which provides a radio link between a mobile terminal and the radio access point.

7. A radio access point according to claim 6, wherein the communication quality information stored in the header is a window size stored in a TCP header.

8. A radio access point according to claim 6, wherein the communication quality information stored in the header is a traffic class stored in an IP header.
